# FASCICULE DE BREVET EUROPEEN

(11) **EP 4 103 473 B1**
(45) Date de publication et mention de la délivrance du brevet: **21.01.2026**
(21) Numéro de dépôt: 21703300.0
(22) Date de dépôt: 10.02.2021
(51) Int. Cl.: B64F 1/00, B63G 11/00, B64C 27/04, B64C 25/52, B63B 35/50

(54) **SYSTEME DE MANUTENTION D'UN AERONEF ET PLATEFORME NAVALE EQUIPEE D'UN TEL SYSTEME**
HANDHABUNGSSYSTEM FÜR EIN FLUGZEUG UND MIT EINEM SOLCHEN SYSTEM AUSGERÜSTETE MARINEPLATTFORM
HANDLING SYSTEM OF AN AIRCRAFT AND NAVAL PLATFORM EQUIPPED WITH SUCH A SYSTEM

(30) Priorité: 11.02.2020 FR 2001332
(43) Date de publication de la demande: 21.12.2022
(73) Titulaire: NAVAL Group, 75015 Paris (FR)
(72) Inventeur: RASPIC, Pierre, 56311 LORIENT CEDEX (FR)
(74) Mandataire: Lavoix
(86) Numéro de dépôt international: PCT/EP2021/053185
(87) Numéro de publication internationale: WO 2021/160661

(56) Documents cités:
- WO-A1-2014/007705
- WO-A1-2018/100186
- CN-A- 108 146 649
- FR-A1- 3 013 332
- US-A1- 2013 099 054
- US-A1- 2019 291 895

## Description

La présente invention concerne un système polyvalent de manutention sécurisée d'un aéronef à atterrissage et décollage vertical.

L'invention concerne également une plateforme navale équipée d'au moins un tel système de manutention.

Plus particulièrement l'invention se rapporte à la manutention sécurisée de tels aéronefs munis d'atterrisseurs à patins.

Les documents US 2019/291895, WO 2014/007705, CN 108 146 649 et US 2013/0099054 décrivent des plateformes d'atterrissage d'aéronefs à atterrissage et décollage vertical munis d'atterrisseurs à patins.

De tels aéronefs comportent par exemple des hélicoptères et/ou des drones à voilure tournante, qui sont utilisés dans de nombreuses applications et à partir de plateformes extrêmement variées.

On sait que la manutention des aéronefs équipés de trains d'atterrissage à pneumatiques est déjà bien maîtrisée dans l'état de la technique.

Par contre la manutention des aéronefs munis d'atterrisseurs à patins est encore relativement difficile.

Ainsi par exemple, pour assurer la manutention et les déplacements de tels aéronefs, des opérateurs peuvent être amenés à fixer de façon temporaire des roues sur les patins, pour faciliter les déplacements des aéronefs.

On conçoit que ceci nécessite l'intervention d'opérateurs, est relativement contraignant en terme de manipulation et prend du temps.

Par ailleurs de tels aéronefs peuvent être opérés à partir de plateformes navales telles que par exemple des bâtiments de surface, des plateformes offshores ou tout autre type de plateformes fixes ou mobiles, dans des environnements relativement sévères par exemple en raison des conditions météorologiques.

Par exemple sur un bâtiment de surface, de tels aéronefs doivent pouvoir être manutentionnés depuis la plateforme d'appontage vers un hangar de stockage et vice versa, en toute sécurité.

Or ces aéronefs à patins présentent majoritairement une masse que l'on peut considérer comme faible à moyenne, comparée à un hélicoptère lourd à pneumatiques.

De ce fait l'environnement engendre une influence rapidement néfaste sur la stabilité de l'aéronef, pouvant porter atteinte à son intégrité et celui-ci pouvant devenir dangereux pour les opérateurs à proximité.

Enfin des zones d'appontage, d'accueil ou de stockage de ce type d'aéronefs sur de tels bâtiments pouvant être très souvent exiguës, il convient de mutualiser au maximum les moyens de manutention des différents types d'aéronefs et autres charges pouvant coexister par exemple à bord d'un tel navire.

En effet on assiste à une augmentation considérable de l'utilisation de drones dans différentes applications en plus des hélicoptères.

Le but de l'invention est donc de résoudre ces problèmes.

A cet effet l'invention a pour objet un système polyvalent de manutention sécurisée d'un aéronef à atterrissage et décollage vertical et muni d'un atterrisseur à patins, selon la revendication 1.

D'autres caractéristiques du système selon l'invention, prises seules ou en combinaison, sont définies dans les revendications 2 à 7.

Suivant un autre aspect l'invention a également pour objet une plateforme navale équipée d'au moins une zone d'appontage/décollage d'au moins un aéronef et d'au moins un système de manutention tel que décrit précédemment.

L'invention sera mieux comprise à la lecture de la description qui va suivre, donnée uniquement à titre d'exemple, et faite en se référant aux dessins annexés, sur lesquels :
- [Fig. 1] la figure 1 représente une vue en perspective illustrant un système de manutention sécurité d'un aéronef selon l'invention,
- [Fig. 2] [Fig. 3] [Fig. 4] les figures 2, 3 et 4 illustrent des vues en perspective de moyens formant chariot motorisé de manutention entrant dans la constitution d'un système selon l'invention,
- [Fig. 5] [Fig. 6] les figures 5 et 6 représentent des vues de côté de tels moyens formant chariot motorisé respectivement en position de saisie et de levage d'un atterrisseur de l'aéronef,
- [Fig. 7] [Fig. 8] les figures 7 et 8 représentent des vues retournées de moyens formant chariot motorisé entrant dans la constitution d'un système de manutention selon l'invention, et
- [Fig. 9] [Fig. 10] les figures 9 et 10 représentent des vues de détail d'un exemple de réalisation de moyens d'immobilisation de tels moyens formant chariot motorisé respectivement en position escamotée et en position déployée.

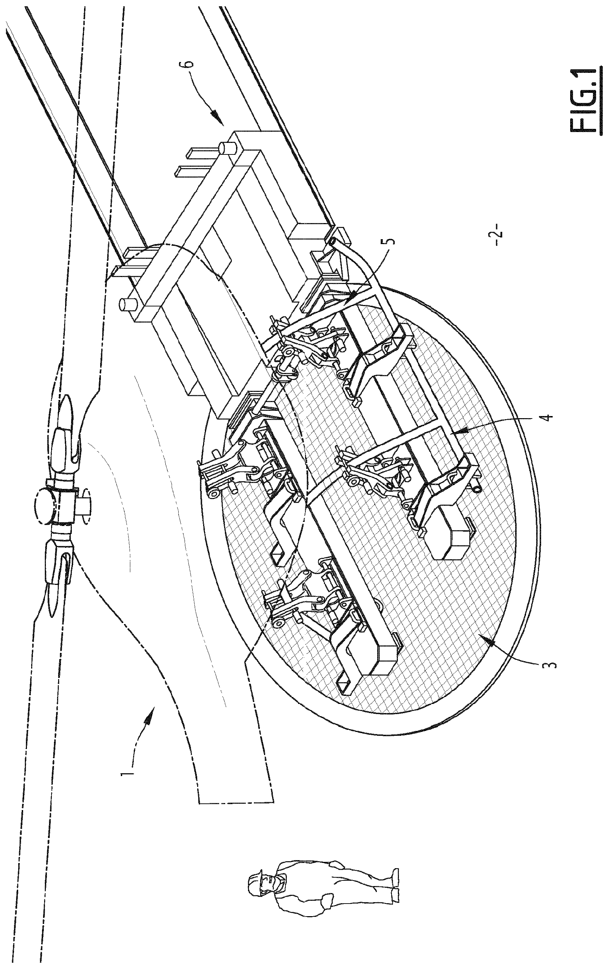

On a en effet illustré sur ces figures, et en particulier sur la figure 1, un système polyvalent de manutention sécurisée d'un aéronef.

Sur la figure 1, l'aéronef est désigné par la référence générale 1.

Dans l'exemple illustré sur cette figure, cet aéronef est un aéronef à atterrissage et décollage vertical, par exemple sur une zone d'appontage 2 d'une plateforme navale.

On reconnait en effet sur celle-ci, une grille d'appontage 3 de type connu en soi dans l'état de la technique.

L'aéronef est par exemple un drone ou encore un hélicoptère léger.

Ce type d'aéronef est muni d'un atterrisseur à patins.

En fait l'atterrisseur de l'aéronef 1 comporte par exemple deux patins latéraux dont l'un est désigné par la référence générale 4 sur ces figures.

Ces patins, par exemple 4, sont reliés au reste de la cellule de l'aéronef 1 par exemple par des arceaux, dont l'un est par exemple désigné par la référence générale 5 sur ces figures.

Le système de manutention selon l'invention comporte des moyens formant chariot motorisé de manutention de cet aéronef, ces moyens formant chariot motorisé étant désignés par la référence générale 6 sur ces figures.

Ces moyens sont pilotables par exemple par un opérateur de manutention schématisé sur cette figure 1.

De façon classique en soi, ces moyens formant chariot motorisé comprennent par exemple des moyens de stockage d'énergie électrique et un moteur électrique d'entraînement de galets ou de roues de motorisation de ceux-ci.

Ces galets ou roues présentent bien entendu des propriétés antidérapantes.

En fait, ces moyens 6 formant chariot motorisé comportent également en outre des moyens de saisie et de levage de l'atterrisseur de l'aéronef 1, pour faciliter sa manutention.

Dans l'exemple illustré sur ces figures, les moyens formant chariot motorisé de manutention comportent un bloc de motorisation désigné par la référence générale 7, à partir duquel s'étendent des bras latéraux respectivement 8 et 9.

Ces bras 8 et 9 sont alors adaptés pour s'engager sous l'aéronef 1 à proximité par exemple des patins de l'atterrisseur de celui-ci.

Comme cela est illustré sur ces figures, ces bras latéraux 8 et 9 des moyens formant chariot de manutention comportent alors des moyens de saisie et de levage de l'atterrisseur de l'aéronef 1 pour faciliter sa manutention.

Ces moyens de saisie et de levage peuvent alors comporter des pinces de saisine de patins et/ou d'arceaux de l'atterrisseur.

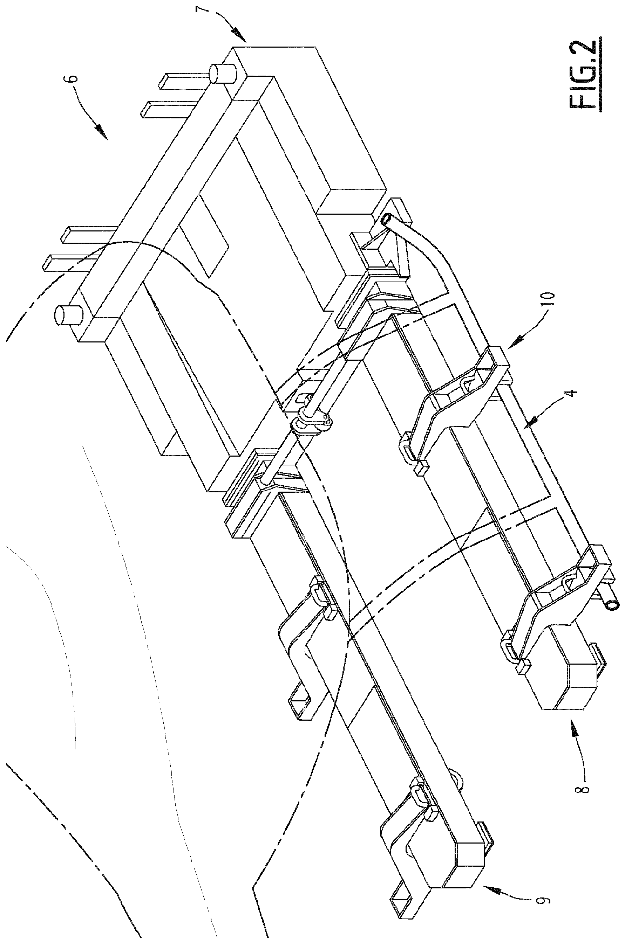

Dans l'exemple illustré sur la figure 2, ces moyens de saisie et de levage comprennent par exemple des pinces de saisine des patins de l'atterrisseur de l'aéronef, comme par exemple la pince désignée par la référence générale 10 sur cette figure 2, permettant de saisir par exemple le patin 4 de l'atterrisseur de l'aéronef 1.

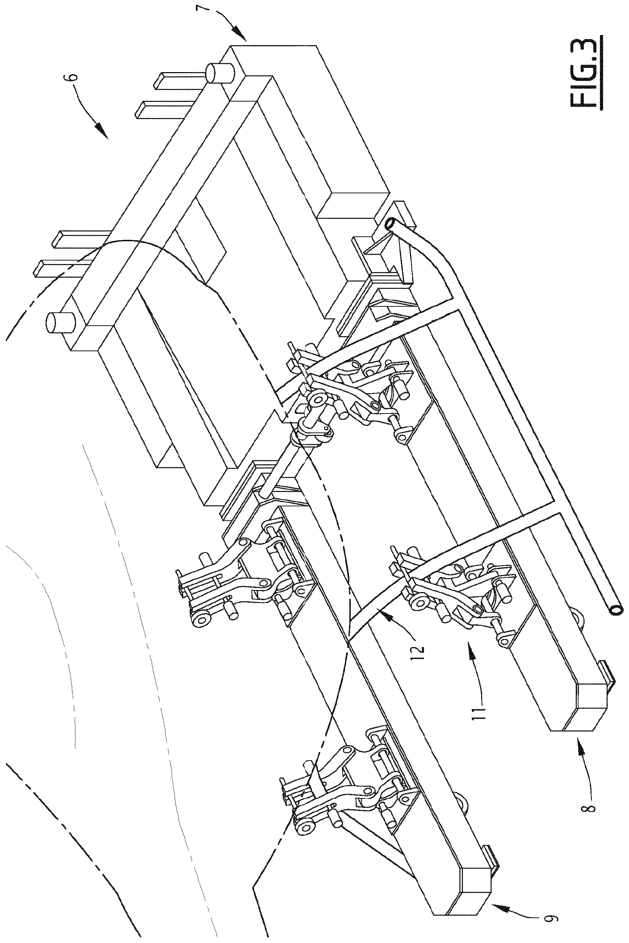

Sur la figure 3, les moyens de saisie et de levage de l'atterrisseur de l'aéronef comportent des pinces de saisine d'arceaux de l'atterrisseur, comme par exemple la pince désignée par la référence générale 11 sur cette figure, permettant par exemple de saisir un arceau 12 de l'atterrisseur.

Une saisie combinée des patins et des arceaux peut bien entendu également être envisagée.

Ces moyens de saisine et de levage sont alors montés sur des bras de levage associés aux bras latéraux des moyens formant chariot de manutention 6.

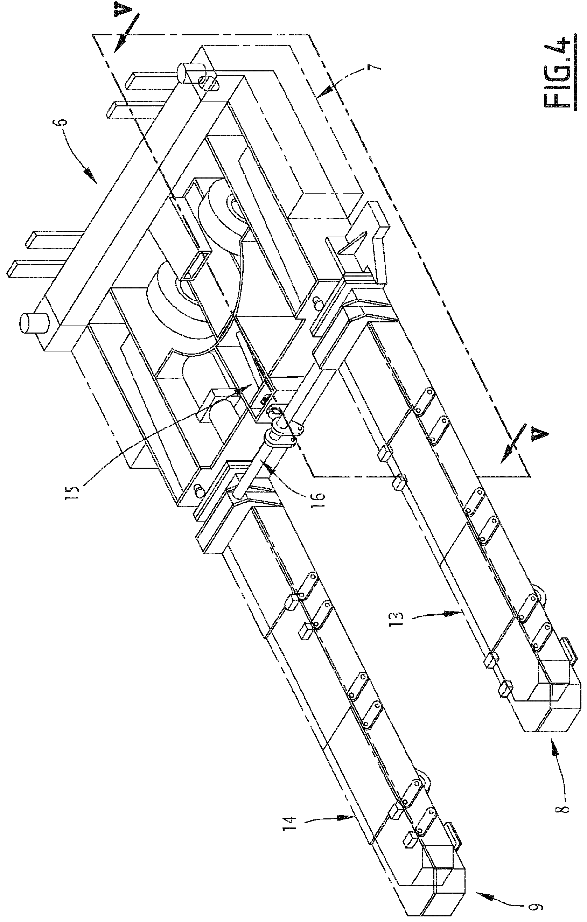

Ces différents moyens sont illustrés plus en détail sur les figures 4, 5 et 6.

On reconnait en effet toujours sur ces figures 4, 5 et 6, les moyens formant chariot de manutention 6, le bloc de motorisation 7 de ceux-ci et les bras latéraux respectivement 8 et 9, de ceux-ci.

Les moyens de saisie et de levage de l'atterrisseur de l'aéronef, comme par exemple les pinces décrites précédemment, sont alors montés sur des bras de levage par exemple 13 et 14, articulés sur le reste de ces moyens formant chariot de manutention.

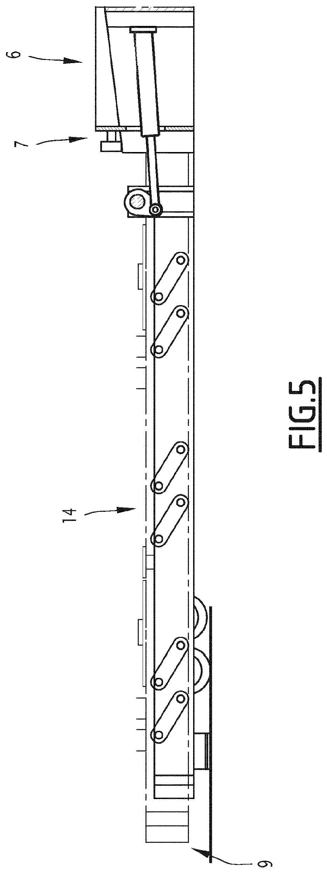

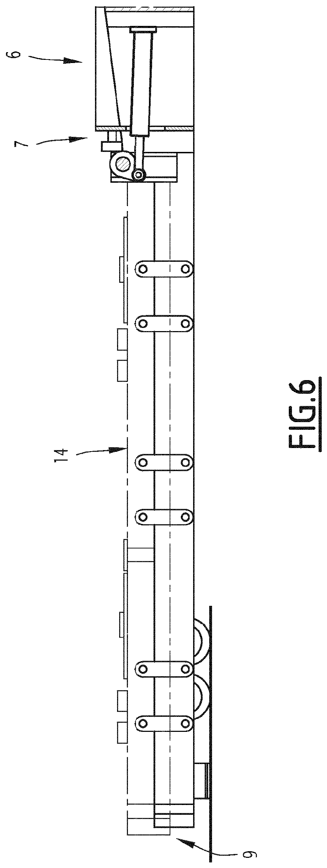

Ces bras de levage sont déplaçables, comme cela est illustré sur ces figures 5 et 6, entre une position basse de saisie ou de dépose de l'atterrisseur de l'aéronef 1 et une position haute de levage de celui-ci.

En effet en position basse illustrée sur la figure 5, il est possible de saisir ou au contraire de relâcher l'atterrisseur de l'aéronef par exemple sur la zone d'appontage correspondante.

En position haute, l'atterrisseur est décollé du sol et il est alors possible de déplacer cet aéronef.

Ce déplacement des bras de levage 13 et 14 entre leur position basse et haute est assuré par exemple par l'intermédiaire de moyens en forme de vérin associés à une tringlerie de déplacement des bras des moyens en forme de chariot sous la commande d'un opérateur.

Ces moyens en forme de vérin sont désignés par la référence générale 15 sur la figure 4 et ces moyens sont associés à une tringlerie de déplacement des bras désignée par la référence générale 16 sur cette figure.

Avantageusement le bloc de motorisation et les moyens de stockage d'énergie sont disposés dans la partie inférieure des moyens en forme de chariot par exemple au même niveau que les bras latéraux de ceux-ci, c'est-à-dire sous la position basse des bras de levage.

La masse de l'ensemble moyens formant chariot de manutention et aéronef est ainsi concentrée dans le bas de l'assemblage, favorisant la stabilité de l'ensemble.

Différents modes de réalisation possibles de ces moyens de déplacement peuvent bien entendu être envisagés.

On conçoit alors que l'utilisation de tels moyens formant chariot de manutention est relativement simple.

Il suffit en effet à un opérateur de manutention de placer celui-ci sous l'aéronef.

Il place ensuite les pinces de saisine sur les patins et/ou les arceaux de l'atterrisseur de l'aéronef afin de fixer cet aéronef sur ces moyens formant chariot de manutention.

Puis il lève les bras de levage afin de soulever l'aéronef, ce qui lui permet en pilotant les moyens de motorisation du chariot, de déplacer cet aéronef.

L'opérateur peut alors amener l'aéronef vers un nouvel emplacement.

En arrivant dans celui-ci, l'opérateur repose l'atterrisseur au sol et désolidarise l'atterrisseur des pinces de saisine.

Il peut alors déplacer les moyens formant chariot de manutention pour dégager l'aéronef.

Les moyens formant chariot motorisé peuvent se présenter sous la forme d'un socle commun mutualisable entre différentes fonctions.

En effet ces moyens de manutention peuvent servir à manipuler des aéronefs, par exemple de différentes natures, dans la mesure où il suffit d'adapter l'interface entre ces moyens formant chariot de manutention et l'aéronef.

Ces moyens peuvent également être utilisés pour assurer la manutention d'autres charges comme par exemple des équipements, des armes ou autres.

Les moyens formant chariot de manutention sont également équipés par exemple de moyens d'immobilisation en position permettant de sécuriser la manutention de l'aéronef ou autre.

Ces moyens d'immobilisation peuvent par exemple comporter des moyens à ventouse qui ont déjà été développés par ailleurs par la Demanderesse.

Ces moyens sont alors déclenchés par l'opérateur et permettent de bloquer les moyens formant chariot de manutention sur la zone d'appontage.

D'autres moyens d'immobilisation comme par exemple des moyens à plaques de frottement peuvent être envisagés.

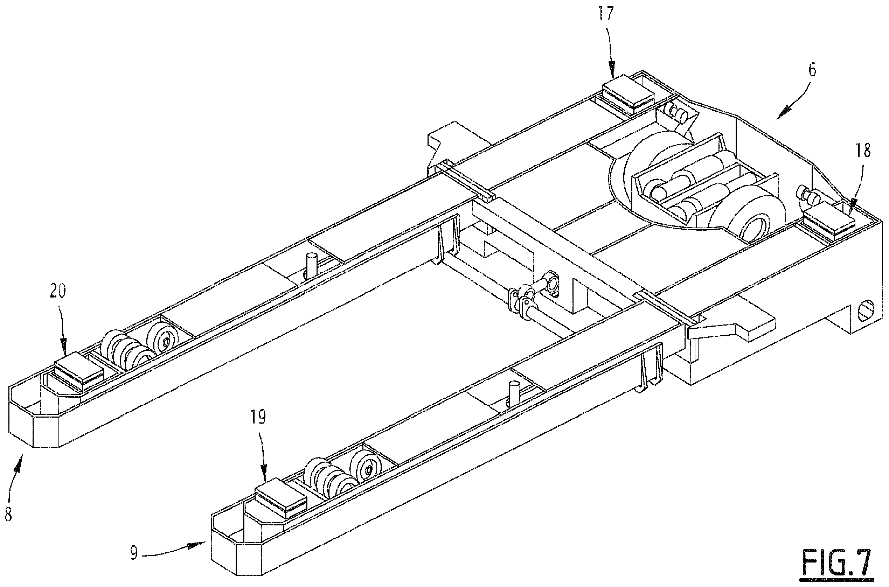

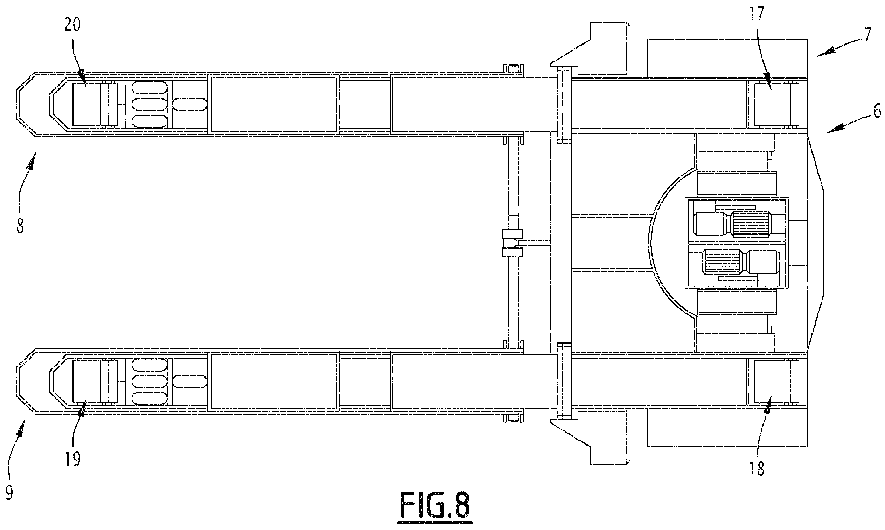

Un exemple de réalisation de tels moyens à plaques de frottement est illustré sur les figures 7, 8, 9 et 10.

On reconnait en effet sur ces figures les moyens formant chariot de manutention 6 avec le bloc de motorisation 7 et les bras latéraux 8 et 9.

Comme cela est illustré, chaque côté du bloc de motorisation 7 et par exemple les extrémités des bras latéraux 8 et 9, peuvent être équipés de moyens à plaques de frottement telles que celles désignées par les références générales 17, 18, 19 et 20 respectivement sur ces figures.

Ces moyens à plaques de frottement présentent des propriétés adhérentes et antidérapantes vis-à-vis de la zone d'appontage qui sont supérieures à celles des galets ou des roues des moyens formant chariot de manutention pour sécuriser ceux-ci.

Ces moyens à plaques de frottement sont alors déplaçables entre une position escamotée dans les moyens formant chariot de manutention et une position déployée de blocage des moyens formant chariot de manutention en position.

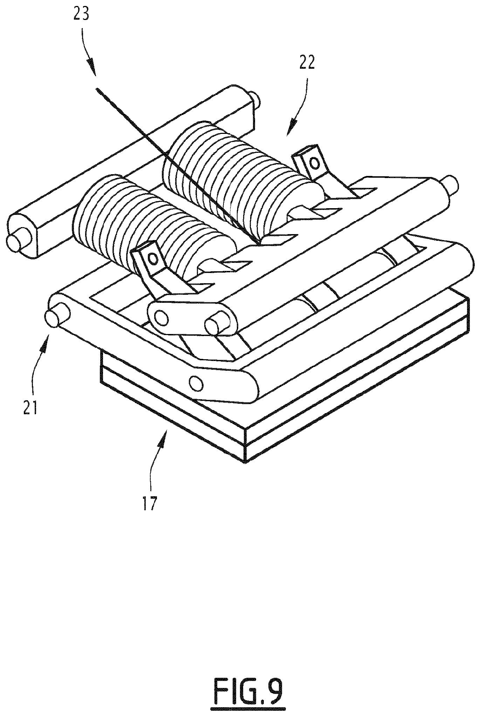

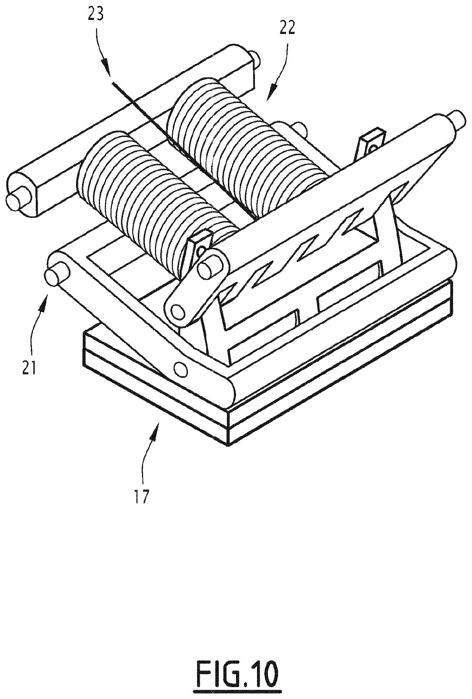

Ceci est illustré sur les figures 9 et 10 respectivement.

En effet on reconnait sur ces figures, la plaque de frottement 17 qui est portée par un équipage mobile désigné par la référence générale 21 sur ces figures, associé à des moyens élastiques de poussée désignés par la référence générale 22 et à un organe de déploiement désigné par la référence générale 23.

En position escamotée, la plaque 17 est alors remontée par rapport à la zone d'appontage, ce qui autorise les déplacements des moyens formant chariot de motorisation 6.

Lorsque l'opérateur souhaite sécuriser ces moyens de motorisation en position, il déclenche alors le déploiement des plaques par l'intermédiaire des moyens de déploiement 23, ce qui provoque le déploiement des plaques contre la zone d'appontage et l'immobilisation des moyens formant chariot en position.

Ces moyens d'immobilisation permettent une grande liberté d'utilisation des moyens formant chariot de manutention et notamment de s'affranchir de moyens de guidage tels que des rails disposés dans la zone de manutention.

L'utilisation de ces moyens de manutention est alors possible en conservant la stabilité de l'ensemble dans des conditions opérationnelles difficiles comme par exemple une mer de force 4/5.

Cela est également rendu possible par la disposition particulière du bloc de motorisation et des moyens de stockage d'énergie dans la partie inférieure des moyens formant chariot par exemple au même niveau que les bras latéraux, c'est-à-dire sous la position basse des bras de levage.

En effet la masse de l'ensemble formé par les moyens formant chariot de manutention et de l'aéronef est concentrée dans le bas de l'assemblage, ce qui favorise la stabilité de l'ensemble.

On conçoit alors que le système selon l'invention est extrêmement polyvalent et flexible et permet de résoudre un certain nombre de problèmes liés à une cohabitation opérationnelle de différentes fonctions dans un environnement donné, comme par exemple un environnement limité et hostile en matière de déplacements de la plateforme et de vent par exemple relatif dans la zone de manutention.

De plus il n'est pas contraint par des rails ou d'autres moyens de guidage comme on peut les rencontrer dans des systèmes de l'état de la technique.

Bien entendu de nombreux modes de réalisation encore de ce système peuvent être envisagés sans sortir du cadre de l'invention comme défini dans la revendication 1.

## Revendications

1. Système polyvalent de manutention sécurisée d'un aéronef (1) à atterrissage et décollage vertical et muni d'un atterrisseur à patins, comportant des moyens (6) formant chariot motorisé de manutention de l'aéronef (1) et muni en outre de moyens (10, 11) de saisie et de levage de l'atterrisseur de l'aéronef pour faciliter sa manutention, les moyens (10 ; 11) de saisie et de levage de l'atterrisseur étant montés sur des bras de levage (13, 14) des moyens (6) formant chariot de manutention, **caractérisé en ce que** les bras de levage (13, 14) sont articulés sur le reste des moyens (6) formant chariot de manutention et sont déplaçables entre une position basse de saisie ou de dépose de l'atterrisseur et une position haute de levage de celui-ci.

2. Système polyvalent de manutention selon la revendication 1, **caractérisé en ce que** les moyens de saisie et de levage de l'atterrisseur de l'aéronef (1) comprennent des pinces (10 ; 11) de saisine de patins (4) et/ou d'arceaux (12) de l'atterrisseur.

3. Système polyvalent de manutention selon la revendication 1 ou 2, **caractérisé en ce que** les bras de levage (13, 14) sont déplaçables entre leurs positions basse et haute par l'intermédiaire de moyens en forme de vérin (15).

4. Système polyvalent de manutention selon l'une quelconque des revendications précédentes, **caractérisé en ce que** les moyens (6) formant chariot de manutention comportent des moyens (17, 18, 19 20) d'immobilisation en position permettant de sécuriser la manutention de l'aéronef.

5. Système polyvalent de manutention selon la revendication 4, **caractérisé en ce que** les moyens d'immobilisation comprennent des moyens à plaques de frottement (17, 18, 19 20).

6. Système polyvalent de manutention selon la revendication 5, **caractérisé en ce que** les moyens à plaques de frottement (17, 18, 19 20) sont déplaçables entre une position escamotée dans les moyens formant chariot de manutention et une position déployée de blocage des moyens formant chariot de manutention en position.

7. Système polyvalent de manutention selon l'une quelconque des revendications précédentes, **caractérisé en ce que** les moyens (6) formant chariot de manutention comportent des moyens de motorisation et des moyens de stockage d'énergie disposés dans la partie inférieure de ceux-ci pour favoriser leur stabilité.

8. Plateforme navale équipée d'au moins une zone d'appontage/décollage d'au moins un aéronef et d'au moins un système de manutention selon l'une quelconque des revendications précédentes.

## Patentansprüche

1. Mehrzwecksystem zur sicheren Handhabung eines Luftfahrzeugs (1) mit senkrechter Landung und senkrechtem Start, das mit einem Kufenfahrwerk versehen ist, umfassend Einrichtungen (6), die einen motorisierten Bewegungswagen des Luftfahrzeugs (1) bilden und ferner mit Einrichtungen (10, 11) zum Ergreifen und Anheben des Fahrwerks des Luftfahrzeugs versehen sind, um seine Handhabung zu erleichtern, wobei die Einrichtungen (10, 11) zum Greifen und Heben des Fahrwerks an Hebearmen (13, 14) der Einrichtungen (6) montiert sind, die einen Handhabungswagen bilden,
**dadurch gekennzeichnet, dass** die
Hebearme (13, 14) an dem Rest der Einrichtungen (6), die einen Förderwagen bilden, angelenkt sind und zwischen einer unteren Position zum Ergreifen oder Absetzen des Fahrwerks und einer oberen Position zum Anheben des Fahrwerks verschiebbar sind.

2. Mehrzwecksystem zur Handhabung nach Anspruch 1, **dadurch gekennzeichnet, dass** die Einrichtungen zum Greifen und Heben des Fahrwerks des Luftfahrzeugs (1) Greifzangen (10; 11) zum Greifen von Kufen (4) und/oder Bügeln (12) des Fahrwerks umfassen.

3. Mehrzwecksystem zur Handhabung nach Anspruch 1 oder 2, **dadurch gekennzeichnet, dass** die Hebearme (13, 14) zwischen ihrer unteren und oberen Position mittels einer Einrichtung in Form eines Zylinders (15) verschiebbar sind.

4. Mehrzwecksystem zur Handhabung nach einem der vorherigen Ansprüche, **dadurch gekennzeichnet, dass** die Einrichtungen (6), die einen Bewegungswagen bilden, Einrichtungen (17, 18, 19 20) zum Feststellen in der Position umfassen, die es ermöglichen, die Handhabung des Luftfahrzeugs zu sichern.

5. Mehrzwecksystem zur Handhabung nach Anspruch 4, **dadurch gekennzeichnet, dass** die Feststelleinrichtungen Einrichtungen mit Reibungsplatten (17, 18, 19 20) umfassen.

6. Mehrzweck-Bewegungssystem nach Anspruch 5, **dadurch gekennzeichnet, dass** die Einrichtungen mit Reibungsplatten (17, 18, 19 20) zwischen einer eingezogenen Position in den Einrichtungen, die den Handhabungswagen bilden, und einer ausgefahrenen Position zum Blockieren der Einrichtungen, die den Handhabungswagen bilden, in der Position verschiebbar sind.

7. Mehrzwecksystem zur Handhabung nach einem der vorherigen Ansprüche, **dadurch gekennzeichnet, dass** die Einrichtungen (6), die einen Handhabungswagen bilden, Motorisierungseinrichtungen und Energiespeichereinrichtungen umfassen, die in ihrem unteren Teil angeordnet sind, um ihre Stabilität zu begünstigen.

8. Schiffsplattform, die mit mindestens einem Lande-/Startbereich für mindestens ein Luftfahrzeug und mindestens einem Handhabungssystem nach einem der vorherigen Ansprüche ausgestattet ist.

## Claims

1. A multipurpose system for the safe handling of a vertical landing and take-off aircraft (1) equipped with a skid landing gear, comprising means (6) forming a motorised trolley for handling the aircraft (1) and also equipped with means (10, 11) for gripping and lifting the aircraft landing gear to facilitate its handling, the gripping and lifting means (10 ; 11) of the landing gear being mounted on lifting arms (13, 14) of the handling trolley means (6), **characterized in that** the lifting arms (13, 14) are articulated to the rest of the handling trolley means (6) and are movable between a lowered position for gripping or depositing the landing gear and a raised position for lifting it.

2. The multipurpose handling system according to claim 1, **characterised in that** the means for gripping and lifting the aircraft landing gear (1) comprise clamps (10; 11) for gripping skids (4) and/or hoops (12) of the landing gear.

3. The multipurpose handling system according to claim 1 or 2, **characterised in that** the lifting arms (13, 14) are movable between their lowered and raised positions via cylinder means (15).

4. The multipurpose handling system according to any of the preceding claims, **characterised in that** the handling trolley means (6) comprise means (17, 18, 19, 20) for immobilising the aircraft in position so as to secure its handling.

5. The multipurpose handling system according to claim 4, **characterised in that** the securing means comprise friction plate means (17, 18, 19, 20).

6. The multipurpose handling system according to claim 5, **characterised in that** the friction plate means (17, 18, 19, 20) are movable between a retracted position in the handling trolley means and an extended position of locking the handling trolley means in position.

7. The multipurpose handling system according to any of the preceding claims, **characterised in that** the handling trolley means (6) comprise motorisation means and energy storage means disposed in the lower part of the handling trolley means (6) to promote their stability.

8. A naval platform equipped with at least one landing/take-off area for at least one aircraft and at least one handling system according to any of the preceding claims.
